# EUROPEAN PATENT APPLICATION

(11) **EP 4 659 912 A1**
(43) Date of publication of application: **10.12.2025**
(21) Application number: 24778102.4
(22) Date of filing: 27.03.2024
(51) Int. Cl.: B25J 9/16

(54) **WAKE-UP METHOD AND APPARATUS FOR ROBOT IN SHUTDOWN STATE**

(30) Priority: 27.03.2023 CN 202310305983
(71) Applicant: Hangzhou Hikrobot Co., Ltd., Hangzhou, Zhejiang 310051 (CN)
(72) Inventor: ZHU, Jiacheng, Hangzhou, Zhejiang 310051 (CN)
(74) Representative: Michalski Hüttermann & Partner Patentanwälte mbB
(86) International application number: PCT/CN2024/084240
(87) International publication number: WO 2024/199316

(57) **Abstract**

A wake-up method for a robot in a shutdown state, which method is executed by a server used for providing a robot control service. The method comprises: a server responding to a shutdown request from a terminal for operating and controlling a robot, wherein the shutdown request is generated by the terminal in response to a shutdown operation, which is inputted by a user and comprises configurable wake-up time information and identification information of robots to be shut down, and the shutdown request carries the wake-up time information and the identification information of said robots; and sending to said robots an associated task associated with a shutdown task, and a shutdown instruction which carries the wake-up time information, such that said robots execute the shutdown instruction after completing the associated task, are in a shutdown state of being disconnected from the terminal and the server after the shutdown instruction is executed, and start-up according to the wake-up time information in the shutdown instruction, wherein there are one or more said robots.

## Description

### CROSS-REFERENCE OF RELATED APPLICATIONS

This application claims priority to Chinese Patent Application No. 202310305983.9 filed on March 27, 2023, the entire content of which is incorporated herein by reference.

### TECHNICAL FIELD

**The** present disclosure relates to the field of robot control and in particular to a wake-up method for a robot in a shutdown state.

### BACKGROUND

With rapid development of robot industry, the number of the robot devices accessed by the servers providing robot control services increases significantly.

**In** the actual scenarios of large workshops with multiple devices, when robot groups of a massive number of robots are to be shut down at the end of the routine work or in holidays or festivals, for example, when as many hundreds of automated guided vehicles (AGVs) are to be shut down, each of these robots cannot be shut down immediately but shut down only when it completes its current task, leading to time-consuming and strenuous human operations. Furthermore, it is required to start these devices one by one at the start of work. Due to a massive number of robots, it takes a huge amount of time to shut down the robots and wake up the robots in shutdown state, reducing the efficiency and lowering the automation degree.

### SUMMARY

According to a first aspect of one or more embodiments of the present disclosure, there is provided a wake-up method for a robot in a shutdown state, performed by a server providing robot control services and comprising:
receiving a shutdown request from a terminal for controlling a robot to operate, wherein the shutdown request is generated by the terminal in response to a shutdown operation which is input by a user and comprises configurable wake-up time information and identifier information of a to-be-shut-down robot, and the shutdown request carries the wake-up time information and the identifier information of the to-be-shut-down robot; and
sending, based on the identifier information of the to-be-shut-down robot, an association task associated with a shutdown task and a shutdown instruction carrying the wake-up time information to the to-be-shut-down robot such that the to-be-shut-down robot performs the shutdown instruction after completing the association task, and after performing the shutdown instruction, the to-be-shut-down robot enters a shutdown state in which the to-be-shut-down robot loses contact with the terminal and the server, and starts up based on the wake-up time information in the shutdown instruction;
wherein there are one or more to-be-shut-down robots.

According to a second aspect of one or more embodiments of the present disclosure, there is provided a wake-up method for a robot in a shutdown state, performed by a terminal for controlling a robot to operate and comprising:
**in** response to a shutdown operation which is input by a user and includes configurable wake-up time information and identifier information of a to-be-shut-down robot, sending a shutdown request carrying the wake-up time information and the identifier information of the to-be-shut-down robot to a server for providing robot control services, such that the server performs the wake-up method for the robot in the shutdown state according to the first aspect,
wherein there are one or more to-be-shut-down robots.

According to a third aspect of one or more embodiments of the present disclosure, there is provided a terminal, comprising:
**a** first response module, configured to: in response to a shutdown operation which is input by a user and includes configurable wake-up time information and identifier information of a to-be-shut-down robot, send a shutdown request carrying the wake-up time information and the identifier information of the to-be-shut-down robot to a server for providing robot control services, such that the server performs the wake-up method for the robot in the shutdown state according to the first aspect.

**According** to a fourth aspect of one or more embodiments of the present disclosure, there is provided a scheduling server, providing robot control services and comprising:
**a** second response module, configured to: receive a shutdown request from a terminal for controlling a robot to operate, wherein the shutdown request is generated by the terminal in response to a shutdown operation which is input by a user and comprises configurable wake-up time information and identifier information of a to-be-shut-down robot, and the shutdown request carries the wake-up time information and the identifier information of the to-be-shut-down robot; and
**a** start and shutdown module, configured to: send, based on the identifier information of the to-be-shut-down robot, an association task associated with a shutdown task and a shutdown instruction carrying the wake-up time information to the to-be-shut-down robot such that the to-be-shut-down robot performs the shutdown instruction after completing the association task, and after performing the shutdown instruction, the to-be-shut-down robot enters a shutdown state in which the to-be-shut-down robot loses contact with the terminal and the server, and starts up based on the wake-up time information in the shutdown instruction;
wherein there are one or more to-be-shut-down robots.

According to a fifth aspect of one or more embodiments of the present disclosure, there is provided a system for robot management, comprising: a terminal according to the third aspect, and a scheduling server according to the fourth aspect.

In the wake-up method for a robot in shutdown state according to one or more embodiments of the present disclosure, the shutdown parameter information is configured in a terminal and an association task associated with a shutdown task and a shutdown instruction carrying wake-up time information are sent to to-be-shut-down robot via a server such that the to-be-shut-down robot can complete the association task and then perform the shutdown instruction and then enter a shutdown state and also can start up in the shutdown state based on the wake-up time information in the shutdown instruction. In this way, it is no need to perform shutdown by hand after the robot completes their current task, realizing automatic start and shutdown of the robot. For a robot group with a massive number of robots, this method helps realize one-key group shutdown and one-key group startup, improving the shutdown and startup efficiency of the robot group with a massive number of robots.

### BRIEF DESCRIPTION OF THE DRAWINGS

FIG. 1 is a flowchart implementing a wake-up method for a robot in a shutdown state according to an embodiment of the present disclosure.
FIG. 2a is a shutdown flowchart illustrating a wake-up method in a shutdown state in a common shutdown mode according to an embodiment of the present disclosure.
FIG. 2b is a schematic diagram illustrating a shutdown operation interface at a monitoring client side.
FIG. 3 is a schematic diagram illustrating a process flow of to-be-shut-down AGVs satisfying shutdown condition.
FIG. 4 is a schematic diagram illustrating a process flow of to-be-shut-down AGVs not satisfying one-key shutdown condition.
FIG. 5 is a schematic diagram illustrating state changes identified by a server and a conversion condition between state changes in a successful shutdown process of AGVs in a common shutdown mode.
FIG. 6 is a schematic diagram illustrating a process flow of a charge-supporting shutdown mode.
FIG. 7 is a schematic diagram illustrating a process flow of a shutdown mode releasing load in situ.
FIG. 8 is a schematic diagram illustrating a shutdown cancel flow.
FIG. 9 is a schematic diagram illustrating a terminal according to an embodiment of the present disclosure.
FIG. 10 is a schematic diagram illustrating a scheduling server according to an embodiment of the present disclosure.
FIG. 11 is a schematic diagram illustrating a terminal and a scheduling server according to an embodiment of the present disclosure.

### DETAILED DESCRIPTION OF THE EMBODIMENTS

In order to make the objects, technical means and advantages of the present disclosure clearer and more intelligible, the present disclosure will be further detailed below in combination with drawings.

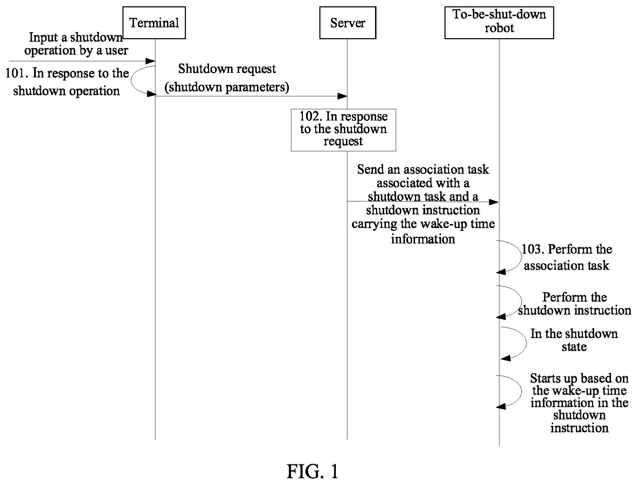

With reference to FIG. 1, it is a flowchart illustrating a wake-up method for a robot in a shutdown state according to an embodiment of the present disclosure. The method includes steps 101 to 103.

At step 101, in response to a shutdown operation which is input by a user and at least includes configurable wake-up time information and identifier information of a to-be-shut-down robot, a terminal for controlling robots to operate sends a shutdown request at least carrying the wake-up time information and the identifier information of the to-be-shut-down robot to a server for providing robot control services.

As an example, the shutdown operation further includes at least one of optional shutdown mode information and configurable shutdown life cycle information, and the shutdown life cycle information is configured to set a shutdown waiting time length to control execution and termination of a shutdown process of the to-be-shut-down robot.

At step 102, in response to the shutdown request from the terminal for controlling robots to operate, the server, based on the identifier information of the to-be-shut-down robot, sends to the to-be-shut-down robot an association task associated with a shutdown task and a shutdown instruction at least carrying the wake-up time information.

As an example, the shutdown request further carries at least one of the shutdown life cycle information and the shutdown mode information, and the shutdown mode includes one or a combination of:
**a** common shutdown mode, configured to perform wake-up in a shutdown state for the robot without constraint of a shutdown condition;
**a** charge-supporting shutdown mode, configured to perform wake-up in the shutdown state for a low-battery-level robot with a current battery level lower than a preset battery level threshold; and
**a** shutdown mode releasing load in situ, configured to perform wake-up in the shutdown state for a robot capable of releasing load.

As an example, in the embodiments of the present disclosure, the shutdown task includes the shutdown operation and the wake-up operation in the shutdown state performed by the to-be-shut-down robot in response to the shutdown instruction from the server, and the association task associated with the shutdown task includes a task performed in order to complete the shutdown task. The association task is related to the shutdown mode, and different shutdown modes correspond to different association tasks. In the charge-supporting shutdown mode, there is a corresponding association task for moving to a charge station and charging. In the shutdown mode releasing load in situ, there is a corresponding association task releasing load. Further, different shutdown modes may correspond to a same association task, for example, a task for moving to a shutdown stay position to enable those robots in the shutdown state to be converged for ease of management for the robots. Those skilled in the arts can understand that the charge-supporting shutdown mode and the shutdown mode releasing load in situ are shutdown modes with condition constraint.

**It** should be understood that the shutdown modes are not limited to the above modes and the specific shutdown mode can be designed based on the service requirements of the application scenarios; the association tasks are also not limited to the above tasks and the specific association task can be determined based on the service requirements of the application scenarios.

As an example, the server, in response to the shutdown request, establishes an association task associated with the shutdown task and generates a shutdown instruction so as to reduce interaction with the terminal and the robot and improve the efficiency. Sending the association task to the to-be-shut-down robot satisfying the shutdown condition and sending the shutdown instruction to the to-be-shut-down robot completing the association task can not only reduce the occupation of the server bandwidth but also balance with the shutdown the task being performed by the to-be-shut-down robot.

The to-be-shut-down robot satisfying the shutdown condition and the to-be-shut-down robot completing the association task can be determined based on the server-identified state of the to-be-shut-down robot.

As an example, within the shutdown life cycle, a current state of the to-be-shut-down robot is monitored in real time to improve the accuracy of the robot state information.

Within the shutdown life cycle, in a case that the shutdown life cycle is not about to end, the association task is sent to the to-be-shut-down robot to process the to-be-shut-down robot not satisfying the shutdown condition so as to improve the reliability of the shutdown operation, helping the balance of the task and the shutdown and avoiding falling into dead cycle due to anomaly.

At least in a case that the shutdown life cycle is to about end, the shutdown instruction is sent to the to-be-shut-down robot completing the association task such that the shut down instruction is sent no later than the end of the shutdown life cycle. In this way, it helps improve centralized processing capability of the server, increasing the reliability of shutting down the robot group with a massive number of robots.

After the end of the shutdown life cycle, the server switches to a normal working mode and returns the current state of all to-be-shut-down robot to the terminal to help the user to obtain the state of the robot and hence perform corresponding human processing, helping the management of the robot. It should be noted that in the embodiments of the present disclosure, the server controls the state of the robot by its own working mode, for example, when the working mode of the server is a "normal working mode", the server can control the robot to be in a working state of loading or unloading or the like. For example, when the working mode of the server is a "shutdown mode", the server can control the robot to be in a non-working state (to-be-shut-down state). The working mode of the server includes the common shutdown mode, the charge-supporting shutdown mode, and the shutdown mode releasing load in situ and the like. For example, when the server parses out that the shutdown request carries the common shutdown mode, the server may switch to the common shutdown mode and in the common shutdown mode, identify the current state of all online to-be-shut-down AGVs as a state of waiting for shutdown and not being chargeable; when the server parses out that the shutdown request carries the charge-supporting shutdown mode, the server may switch to the charge-supporting shutdown mode and identify the state of each online to-be-shut-down AGV as a state of waiting for shutdown and being chargeable.

As an example, the shutdown life cycle may be timed from receiving the shutdown request, and an about-to-end time can be determined based a preset time threshold. For example, the time threshold is 30 seconds and the shutdown life cycle is 5 minutes. Thus, 30 seconds prior to the end of the shutdown life cycle can be understood as the about-to-end time.

At step 103, in response to the association task and the shutdown instruction, the to-be-shut-down robot firstly performs the association task and after completing the association task, performs the shutdown instruction and then enters a shutdown state in which the to-be-shut-down robot loses contact with the terminal and the server, and starts up in the shutdown state based on the wake-up time information in the shutdown instruction.

There are one or more to-be-shut-down robots, or the to-be-shut-down robots are a robot group with a massive number of robots.

The same shutdown operation includes the identifier information of at least one to-be-shut-down robot, and the identifier information of multiple to-be-shut-down robots corresponds to same wake-up time information and further corresponds to a same shutdown mode and a same shutdown life cycle so as to realize one-key group shutdown and startup.

**In** the embodiments of the present disclosure, the identifier information of the to-be-shut-down robot is configured on the terminal such that the server can realize shutdown operation on a group with a massive number of to-be-shut-down robots and hence achieve the one-key shutdown effect and therefore, the robots are in a shutdown state in which the robots lose contact with the terminal and the server, avoiding the fact that the robots seemingly are in a shutdown state but actually in a sleeping state sending a listening frame with the terminal and/or the server. In this way, the real shutdown of the robots can be achieved. With the wake-up time information configured on the terminal, the robots in the shutdown state can start up by themselves, reducing human startup operation and improving the automation and intelligence of the startup and shutdown of the robots.

For ease of understanding of the present disclosure, the descriptions are made below with AGV as an example. It should be understood that the present disclosure is not limited to the AGV and any other controlled robot can apply.

The technical terms involved in the embodiments will be explained below.

Monitoring client: it is an application program which can be configured to provide human-machine interaction to perform control on the AGV by the server and can be operated on a terminal such as a smart terminal and a computer terminal and the like.

Shutdown mode: it includes the common shutdown mode, the charge-supporting shutdown mode and the shutdown mode releasing load in situ; and the charge-supporting shutdown mode and the shutdown mode releasing load in situ are provided with a limiting condition based on the common mode. The Table below is configured to describe each shutdown mode.

| | |
|---|---|
| Common shutdown mode | In this mode, the server can set the state of the AGV device to a first state (a state of waiting for shutdown and not being chargeable) to start the common shutdown flow. This mode only allows each AGV device to perform a current task until the current task is completed, for example, the current task is an ongoing delivery task, and any other task (e.g. material-receiving task) is forbidden to be allocated; then, the common shutdown flow is performed and the AGV device is waked up when the wake-up time is up. |
| Charge-supporting shutdown mode | In this mode, the server can set the state of the AGV device to a fourth state (a state of waiting for shutdown and being chargeable) to perform the charge-supporting shutdown flow. This mode only allows each AGV device to perform a current task until the current task is completed, for example, the current task is an ongoing delivery task or charge task, and any other task is forbidden to be allocated; then the common shutdown flow is performed and the AGV device is waked up when the wake-up time is up. |
| Shutdown mode releasing load in situ | In this mode, the server can firstly enable the potentially buried AGV device and the load-releasing AGV device to release a load to a current position, and then perform the common shutdown flow and wake up the AGV device when the wake-up time is up. |

Allocation library: it is located at a scheduling side (server side) to allocate a task to the AGV and dispatch the AGV to a closest shutdown stay position in the shutdown flow.

**The** main states of the AGVs identified by the server are as follows:
first state: a state of waiting for shutdown and not being chargeable;
second state: a state of matching the shutdown stay position;
**third** state: a state of waiting for distribution of the shutdown instruction;
fourth state: a state of waiting for shutdown and being chargeable.

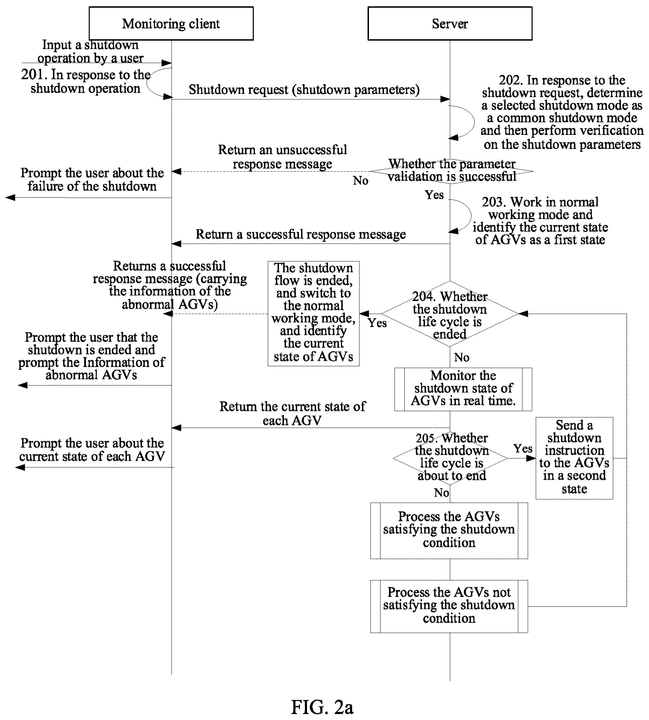

**With** reference to FIG. 2a, it is a schematic diagram illustrating a shutdown flow of a wake-up method in a shutdown state in a common shutdown mode according to an embodiment of the present disclosure.

**At** step 201, the monitoring client provides shutdown mode selection and shutdown parameter configuration to a user, and in response to a shutdown operation which is input by the user includes shutdown parameters, and sends a shutdown request carrying the shutdown parameters to the server.

**As** an example, the shutdown parameters include a shutdown life cycle for describing a shutdown waiting time length, wake-up time information, device identifier information of to-be-shut-down AGV and a shutdown mode. The shutdown mode is a common shutdown mode. The values of the wake-up time information and the shutdown life cycle input by the user are limited so as to avoid distribution of an unreasonable request. For example, if the current time is 19:15 March 27, 2023 and the wake-up time input by the user is 20:00 March 26, 2023 earlier than the current time, it will be considered as unreasonable shutdown request.

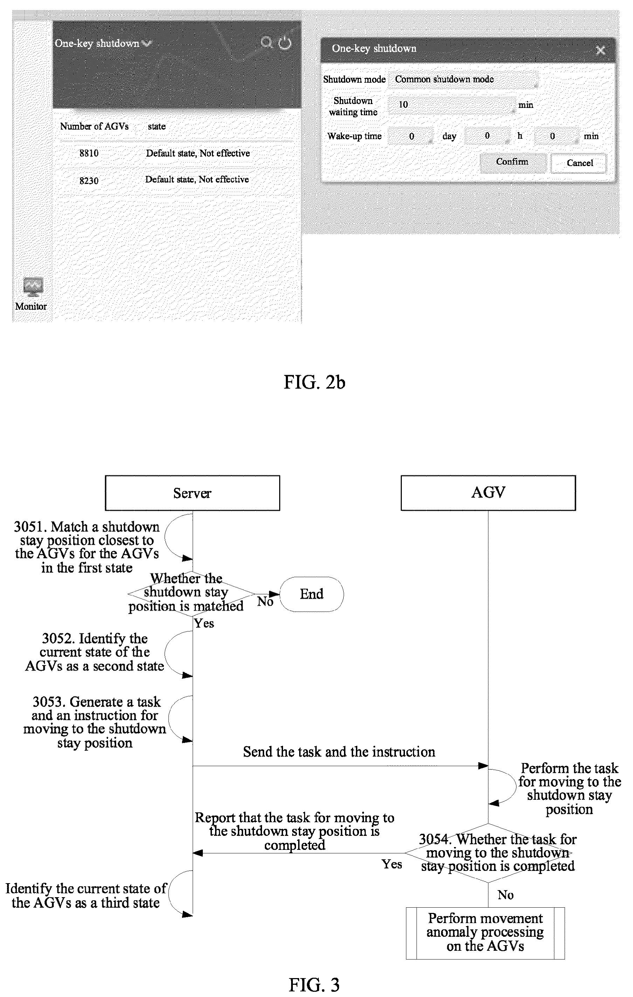

**With** reference to FIG. 2b, it is a schematic diagram illustrating a shutdown operation interface at monitoring client side. This interface includes a control for selecting the shutdown mode, the shutdown waiting time, i.e. the shutdown life cycle, the wake-up time, and the number of the to-be-shut-down AGVs. Multiple to-be-shut-down AGVs are configured with same shutdown life cycle, wake-up time and shutdown mode, that is, the to-be-shut-down AGVs in the same shutdown operation input by the user are configured with same shutdown life cycle, wake-up time and shutdown mode, so as to realize group shutdown operation and group startup operation. Therefore, the to-be-shut-down AGVs in a same shutdown request share a same wake-up time.

At step 202, in response to the received shutdown request, the server parses the shutdown request, and based on a parse result, determines a selected shutdown mode as a common shutdown mode and then performs verification on the shutdown parameters to avoid the circumstance in which the calculated wake-up time is a negative value.

**In** a case of successful verification, the server returns a successful response message to the monitoring client to enable the monitoring client to prompt the user about the successful start of the shutdown flow, and also performs step 203. In a case of unsuccessful verification, the server returns an unsuccessful response message carrying a failure cause to the monitoring client to enable the monitoring client to prompt the user about the failure of the shutdown flow and the failure cause.

As an example, the parsing function of the shutdown request can be implemented as follows: in a message processing index table, a parse function for the shutdown request message is added. Within the parse function, the shutdown parameters in the shutdown request message can be parsed and a reply message whether the shutdown is successfully started is encapsulated. Further, an information structure parameter object for switching of the working mode of the server is constructed, and a function for setting an identifier value of the working mode of the server is called and validated to trigger the server to switch to the shutdown working mode. As an example, the response message may carry return values for representing cancellation failure, receiving illegal value, parse failure of the shutdown parameters, normal execution of the shutdown operation, successful cancellation of the shutdown operation, the shutdown waiting time length less than a minimum value, the shutdown waiting time length greater than a maximum value, and invalid shutdown mode and the like. Different information may have different return values.

At step 203, the server switches from a current normal working mode to a common shutdown mode and in the common shutdown mode, identifies the current state of all online to-be-shut-down AGVs as a first state of waiting for shutdown and not being chargeable.

As an example, the timing of the shutdown life cycle is further triggered and a new task is forbidden to be input into the allocation library.

At step 204, the server determines whether the shutdown life cycle is ended.

If the shutdown life cycle is ended, this shutdown flow is ended and the server exits from the common shutdown mode, switches to the normal working mode, sends the current state of each to-be-shut-down AGV to the allocation library, and returns a successful response message carrying the information of the abnormal to-be-shut-down AGVs to the monitoring client such that the monitoring client can prompt the user about which to-be-shut-down AGVs are abnormal.

**In** this step, as an example, within the shutdown life cycle, each time the server completes one round of traversal on all to-be-shut-down AGVs identified as non-shut down state, the server calls a function for searching for shutdown reporting to execute the reporting of shutdown abnormal information. This function firstly updates and collects the contents corresponding to a shutdown abnormal information container, and then encapsulates all information in the container into packets and then sends them to the monitoring client for processing. The function for searching for shutdown reporting further sends a shutdown result response message carrying the abnormal information to the monitoring client for processing. For example, the abnormal information includes at least one of: AGV device in a state of being loaded with goods, AGV device in a low-battery level state, AGV device itself in an abnormal state, AGV device in a locked state and AGV device bound to a goods shelf.

The response message of this step includes a label field for representing attribute and a state value. The label field is a first value which indicates AGV shutdown state in shutdown flow reporting execution, and the label field is a second value which indicates AGV shutdown state information after the shutdown flow reporting execution is completed. Different state values represent different states, such as AGV itself in an abnormal state, AGV still in a state of task execution, AGV in a low-battery level state, AGV in a state of being loaded with goods, AGV in a default state, AGV in a state of already selecting a shutdown stay position, AGV in a state of already moving to the shutdown stay position and waiting for distribution of the shutdown instruction, and AGV in a state of already receiving the distributed shutdown instruction.

**If** the shutdown life cycle is not ended, the current state of the to-be-shut-down robot is monitored in real time, and preferably, the current state of the to-be-shut-down AGVs is returned and step 205 is performed. At step 205, the server determines whether the shutdown life cycle reaches a preset time threshold to determine whether the shutdown life cycle is about to end.

**If** the shutdown life cycle reaches the preset time threshold, it indicates that the shutdown life cycle is to about to end, and the shutdown instruction is sent to the to-be-shut-down AGVs in a third state and the current state of the to-be-shut-down AGVs is identified as a state of executing the shutdown instruction such that the to-be-shut-down AGVs can perform shutdown in response to the shutdown instruction. The third state is configured to represent a state of waiting for distribution of the shutdown instruction, and the shutdown instruction includes shutdown action information and wake-up time information. For example, the shutdown action information may be shutdown with timed restart with a timed length controlled by the wake-up time information and may also be immediate shutdown without restart.

As an example, the server monitors the progress that the to-be-shut-down AGVs perform shutdown operation and after the shutdown operation is completed, identifies the current state of the to-be-shut-down AGVs as shutdown state.

The to-be-shut-down AGVs, after being shut down, cut off communication with the server and the terminal and enter the shutdown state and also trigger the timing of the wake-up time, and when the timing reaches the length of the wake-up time, the to-be-shut-down AGVs start up by themselves.

As another example, the to-be-shut-down AGVs report to the server after completing the shutdown operation, and then the step 204 is repeated. When the server receives a shutdown message reported by the to-be-shut-down AGVs, the server identifies the current state of the to-be-shut-down AGVs as shutdown state and returns the shutdown state of each to-be-shut-down AGV to the monitoring client.

As an example, the shutdown life cycle is monitored in the following manner: the server records the start time of the present flow, and then calculates a difference between the current time and the start time at a regular interval and compares the difference with the shutdown life cycle, so as to control the shutdown life cycle.

If the shutdown life cycle does not reach the preset time threshold, it indicates the shutdown life cycle is not about to end and the processing flow of the to-be-shut-down AGVs satisfying the shutdown condition and the processing flow of the to-be-shut-down AGVs not satisfying the shutdown condition are performed and then the step 204 is repeated.

As an example, in the common shutdown mode, the to-be-shut-down AGVs in the first state can be determined as the to-be-shut-down AGVs satisfying the shutdown condition; and the to-be-shut-down AGVs in other states than the first state, or the second state, or the third state, or the state of executing the shutdown instruction or the shutdown state can be determined as the to-be-shut-down AGVs not satisfying the shutdown condition. With reference to FIG. 3, it is a schematic diagram illustrating a processing flow of the to-be-shut-down AGVs satisfying the shutdown condition, which includes steps 3051 to 3054.

At step 3051, the allocation library at the scheduling side (server side) matches a shutdown stay position closest to the to-be-shut-down AGVs for the to-be-shut-down AGVs in the first state such that the to-be-shut-down AGVs can converge efficiently.

The server determines whether the shutdown stay position is matched. If yes, step 3052 is performed, and otherwise, it is determined that the to-be-shut-down AGVs do not satisfy the shutdown condition and the flow is ended.

**For** those to-be-shut-down AGVs matching the shutdown stay position:

**At** step S3052, the server identifies the current state of the to-be-shut-down AGVs as a second state, where the state is configured to represent that the AGVs are already matched to the shutdown stay position.

**At** step 3053, the server, based on shutdown stay position information output by the allocation library, generates a task and an instruction for moving to the shutdown stay position, and sends the task and the instruction for moving to the shutdown stay position to the to-be-shut-down AGVs such that the to-be-shut-down AGVs can perform the task for moving to the shutdown stay position in response to the instruction. The instruction for moving to the shutdown stay position carries the shutdown stay position information.

**As** an example, at step 3054, the to-be-shut-down AGVs determine whether the task for moving to the shutdown stay position is completed.

If the task for moving to the shutdown stay position is completed, the AGVs report to the server a message that the task for moving to the shutdown stay position is completed and thus the server identifies the current state of the to-be-shut-down AGVs as a third state. The state is configured to represent that the AGVs are in a state of waiting for distribution of the shutdown instruction.

As another example, the server monitors the execution of the task of the to-be-shut-down AGVs for moving the shutdown stay position, and in a case of completion of the task for moving to the shutdown stay position, identifies the current state of the to-be-shut-down AGVs as the third state.

**If** the task for moving to the shutdown stay position is not completed, movement anomaly processing is performed on the to-be-shut-down AGVs.

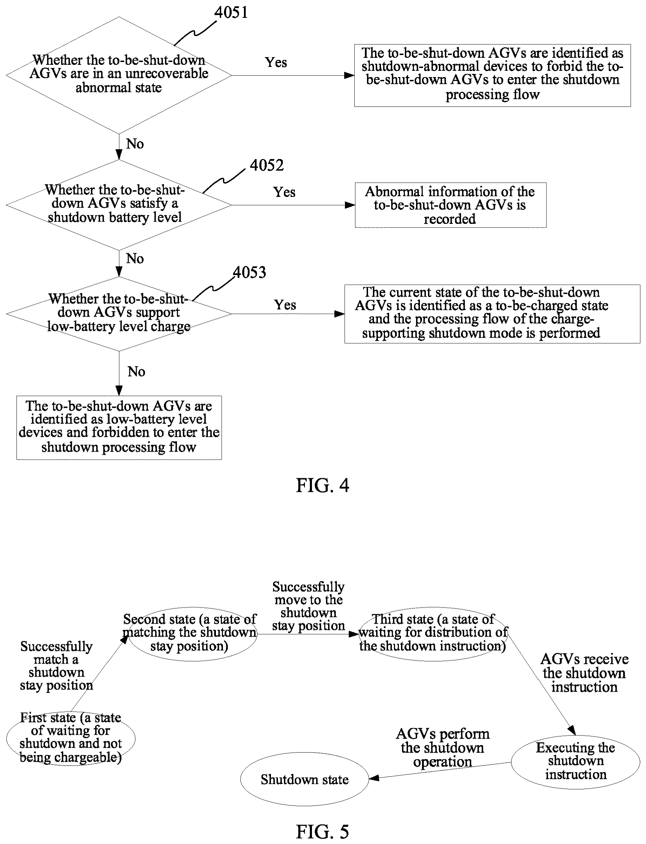

**With** reference to FIG. 4, it is a schematic diagram illustrating a processing flow of the to-be-shut-down AGVs not satisfying one-key shutdown condition. The server performs the following steps 4051 to 4053.

**At** step 4051, it is determined whether the to-be-shut-down AGVs are in an unrecoverable abnormal state. If yes, the to-be-shut-down AGVs are identified as shutdown-abnormal devices to forbid the to-be-shut-down AGVs to enter the shutdown processing flow; otherwise, step 4052 is performed.

**At** step 4052, it is determined whether the to-be-shut-down AGVs satisfy a shutdown battery level. If yes, abnormal information of the to-be-shut-down AGVs is recorded to forbid the to-be-shut-down AGVs to enter the shutdown processing flow; otherwise, step 4053 is performed.

**At** step 4053, it is determined whether the to-be-shut-down AGVs support low-battery level charge. If yes, the current state of the to-be-shut-down AGVs is identified as a to-be-charged state and the processing flow of the charge-supporting shutdown mode is performed; otherwise, the to-be-shut-down AGVs are identified as low-battery level devices and forbidden to enter the shutdown processing flow.

There is no strict sequence for performing the above steps 4051 to 4053. With reference to FIG. 5, it is a schematic diagram illustrating state changes identified by the server and a conversion condition between the state changes in a successful shutdown process of the AGVs in a common shutdown mode.

After completion of the shutdown flow, those to-be-shut-down AGVs with shutdown anomaly can be shut down by human operation. The user inputs a shutdown operation, which includes the device identifier information and the wake-up time of the designated to-be-shut-down AGVs and does not include the shutdown life cycle. The monitoring client, in response to the shutdown operation, sends a forced shutdown request carrying the device identifier information and the wake-up time to the server; the parse for the forced shutdown request is triggered by human through a Content Management Service (CMS) of the server and a forced shutdown response message is returned to the monitoring client. The forced shutdown response message carries return values for representing forced shutdown failure information (AGV device in non-idle state, in a state of being loaded with goods, or not in shutdown stay position), receiving illegal values of the parameters, parse failure of the forced shutdown request, successful execution of the forced shutdown and other information.

**In** this embodiment, within the life cycle, each time one round of processing is performed on all online to-be-shut-down AGVs, the server can report abnormal devices and abnormal causes detected in the flow to the monitoring client, and the monitoring client display the information to inform the user of which devices are in a shutdown abnormal state and remind the user of which devices need early human intervention.

The charge-supporting shutdown mode is configured to enable the to-be-shut-down AGVs not satisfying the shutdown battery level to shut down after being charged. When the server switches from the normal mode to the charge-supporting one-key shutdown mode, the server no more inputs a new task into the allocation library and identifies the state of each online to-be-shut-down AGV in the allocation library as a fourth state. The fourth state represents a state of waiting for shutdown and being chargeable.

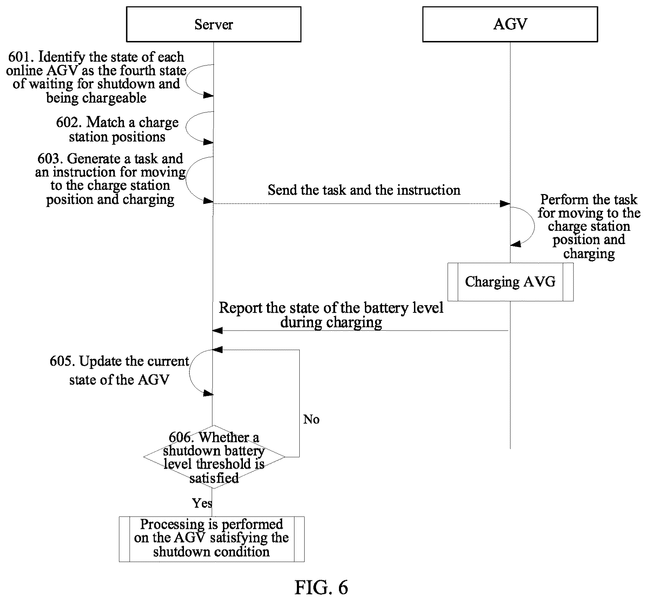

With reference to FIG. 6, it is a schematic diagram illustrating a processing flow of a charge-supporting shutdown mode. After the server parses the shutdown request and performs verification on the shutdown parameters, the following steps 601 to 606 are included.

At step 601, the server switches to the charge-supporting shutdown mode and identifies the state of each online to-be-shut-down AGV as the fourth state of waiting for shutdown and being chargeable.

At step 602, the allocation library of the server matches a charge station positions for the to-be-shut-down AGVs.

**At** step 603, a task and an instruction for moving to the charge station position and charging are generated and sent to the to-be-shut-down AGV and thus the to-be-shut-down AGV can, in response to the task and the instruction for moving to the charge station position and charging, perform the task for moving to the charge station position and charging and invoke a charge flow for charging. The task and the instruction for moving to the charge station position and charging carry the matched charge station position information.

As an example, at step 604, the to-be-shut-down AGV reports to the server a message that the task for moving to the charge station position and charging is completed as well as a current battery level state.

**As** another example, the server monitors the execution of the to-be-shut-down AGV for the task for moving to the charge station position and charging; in a case of completion of the task for moving to the charge station position and charging, step 605 is performed; and the current battery level of the to-be-shut-down AGV is monitored and step 605 is performed.

At step 605, the server updates the current state of the to-be-shut-down AGV, where the state represents the current battery level state.

At step 606, based on the current battery level state, the server determines whether a shutdown battery level threshold is satisfied.

**If** the shutdown battery level threshold is satisfied, the current state of the to-be-shut-down AGV is identified as the first state, the timing of the shutdown life cycle is started, and processing is performed on the to-be-shut-down AGV satisfying the shutdown condition within the shutdown life cycle.

**If** the shutdown battery level threshold is not satisfied, the step 605 is repeated.

**As** an example, in the charge-supporting shutdown mode, the to-be-shut-down AGV with the current battery level state satisfying the shutdown battery level threshold and the to-be-shut-down AGV in the first state can be determined as the to-be-shut-down AGV satisfying the shutdown condition.

The shutdown mode releasing load in situ is configured to process the to-be-shut-down AGV in a loaded state (for example, in a state of being loaded with goods).

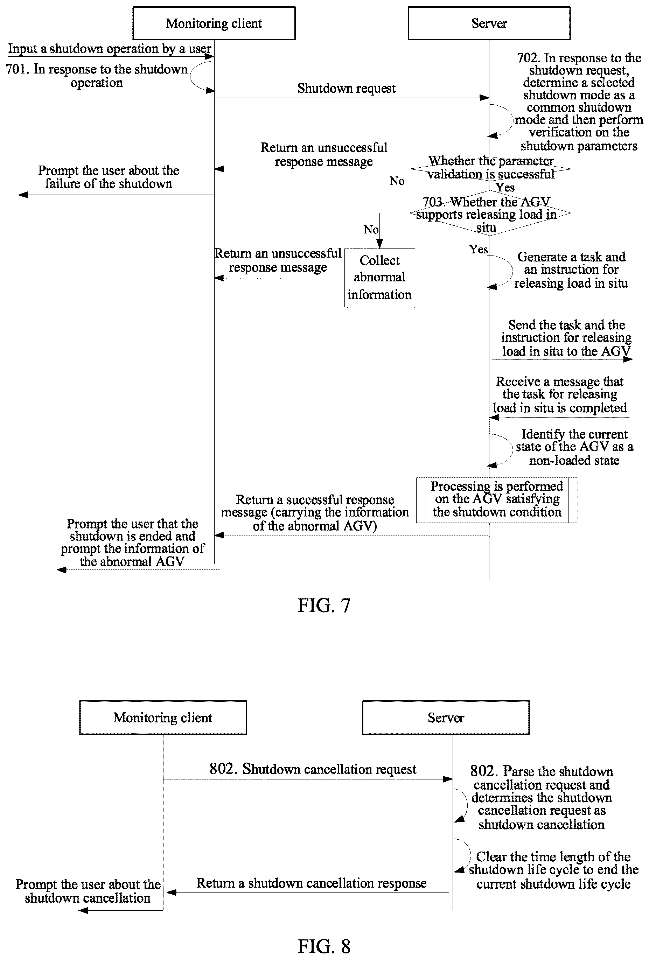

With reference to FIG. 7, it is a schematic diagram illustrating a processing flow of a shutdown mode releasing load in situ, which includes steps 701 to 702 similar to the steps 201 to 202.

At step 703, the server detects whether the to-be-shut-down AGV supports releasing load in situ.

If the server detects the to-be-shut-down AGV supports releasing load in situ, the server generates a task and an instruction for releasing load in situ and sends the task and the instruction to the to-be-shut-down AGV so that the to-be-shut-down AGV can perform the task for releasing load in situ.

**As** an example, the server, after receiving a message that the task for releasing load in situ is completed, identifies the current state of the to-be-shut-down AGV as a non-loaded state.

**As** an example, the server monitors the execution of the task for releasing load in situ, and in a case of completion of the task for releasing load in situ, identifies the current state of the to-be-shut-down AGV as a non-loaded state.

**In** order to help process the to-be-shut-down AGV satisfying the shutdown condition, the to-be-shut-down AGV in the non-loaded state are identified as the to-be-shut-down AGV in the first state, the timing of the shutdown life cycle is started and the processing on the to-be-shut-down AGV satisfying the shutdown condition is performed within the shutdown life cycle.

After the to-be-shut-down AGV releases load in situ, relevant position information corresponding to load identifiers (e.g. goods number) in a first table of a database is updated, and the first table at least includes a correspondence of load identifier, current position information of releasing load, information of to-be-shut-down AGV, and task information; after the server switches to the normal working mode, the server switches a start position of a load identifier task to a current position of releasing load recorded in the first table such that the to-be-shut-down AGV can bear the original load in situ after starting up and recover to the state prior to releasing load in situ.

**If** the server detects the to-be-shut-down AGV does not support releasing load in situ, the server collects abnormal information and returns a response message to the monitoring client, where the response message carries the information of the abnormal to-be-shut-down AGV.

**In** this step, the identifier information of the abnormal devices is stored in a mapping container, with a key value being the device identifier of the to-be-shut-down AGV and the numerical value being abnormal information structure body; its data structure includes: a shutdown flow ending identifier and a shutdown anomaly type. In the shutdown flow ending identifier, different values respectively represent flow being un-ended and flow being ended, and in the shutdown anomaly type, different values respectively represent different types, for example, the AGV device with shutdown anomaly is in a state of being loaded with goods, the AGV device with shutdown anomaly is in a low-battery level state, the AGV device with shutdown anomaly is in a state of task execution, the AGV device with shutdown anomaly itself is in an abnormal state, the AGV device is in a stay state, and the AGV device is bound to a goods shelf and the like.

**A** function for obtaining reporting robot information is invoked, and the reporting information is obtained by the device identifiers of the AGVs and carried in the communication with the monitoring client.

As an example, in the shutdown mode releasing load in situ, the to-be-shut-down AGV in the first state or non-loaded state can be determined as the to-be-shut-down AGV satisfying the shutdown condition. It should be understood that the processing flows in various shutdown modes can be one or combined based on service requirements. When the processing flow of the shutdown mode is one, the processing flows of various shutdown modes are executed independently; and when combination is performed on the processing flows of the shutdown modes, for example, the service requirement is charging after releasing load, and shutting down after charging, or releasing load after charging and then shutting down after releasing load, or shutting down after parallel completion of releasing load and charging and the like, the processing flows of various shutdown modes can be combined.

With reference to FIG. 8, it is a schematic diagram illustrating a shutdown cancellation flow. The shutdown cancellation flow is configured to terminate an ongoing shutdown process, and includes steps 801 to 802.

At step 801, the monitoring client, in response to a shutdown cancellation operation input by a user, sends a shutdown cancellation request to the server.

At step 802, the server parses the shutdown cancellation request and determines the shutdown cancellation request as shutdown cancellation, clears the time length of the shutdown life cycle to end the current shutdown life cycle, terminates an ongoing current task, exits from the current shutdown mode, switches to the normal working mode, ends the shutdown flow, and returns a successful shutdown cancellation response to the monitoring client so as to notify the user that the shutdown operation is already cancelled.

**In** this embodiment, the association task associated with the shutdown task can be generated in the following manner: triggered by the allocation library, the server uses a function for processing the shutdown task to process an output of the allocation library. The instruction of the association task can be generated in the following manner: the function for instruction encapsulation calls a protocol plugin interface, and necessary parameters are input and encapsulated into an instruction packet and then the instruction packet is sent to an AGV for execution via a sending interface.

In this embodiment, a large batch of to-be-shut-down AGVs are shut down in a designated area. Further, the shutdown operation can be cancelled in the shutdown process of the to-be-shut-down AGVs. When the wake-up time is reached, the AGVs can automatically start up. Therefore, the startup and shutdown efficiency of a large batch of to-be-shut-down AGVs can be improved, bringing convenience to user operation. The shutdown processing is performed on the to-be-shut-down AGVs satisfying the shutdown condition, balancing the ongoing task and the shutdown and ensuring shutdown following satisfaction of the shutdown condition such as completing task as priority and satisfying the battery level requirement and the like. In this way, the circumstance that the AGVs cannot be started up or cannot perform task after going online can be avoided, and thus the AGVs which can be shut down can be reliably shut down. The server sends a response message to the terminal to display detail information of each to-be-shut-down AGV to the users, helping people to intervene in the AGVs in a non-shutdown state, and improving the management of the AGVs.

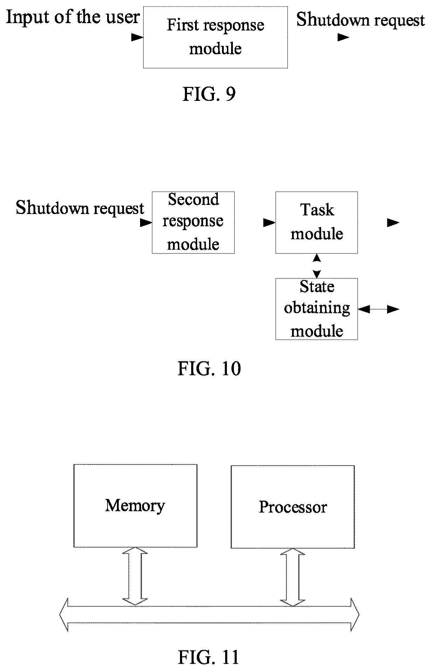

FIG. 9 is a schematic diagram illustrating a terminal according to an embodiment of the present disclosure. As shown in FIG. 9, the terminal includes a first response module.

The first response module is configured to: in response to a shutdown operation which is input by a user and includes configurable wake-up time information and identifier information of a to-be-shut-down robot, send a shutdown request carrying the wake-up time information and the identifier information of the to-be-shut-down robot to a server for providing robot control services, such that the server performs the wake-up method for the robot in the shutdown state of any one of the embodiments.

FIG. 10 is a schematic diagram illustrating a scheduling server according to an embodiment of the present disclosure. As shown in FIG. 10, the scheduling server includes a second response module and a task module.

The second response module is configured to: receive a shutdown request from a terminal for controlling a robot to operate, wherein the shutdown request is generated by the terminal in response to a shutdown operation which is input by a user and comprises configurable wake-up time information and identifier information of a to-be-shut-down robot, and the shutdown request carries the wake-up time information and the identifier information of the to-be-shut-down robot.

The task module is configured to: send an association task associated with a shutdown task and a shutdown instruction carrying the wake-up time information to the to-be-shut-down robot such that the to-be-shut-down robot performs the shutdown instruction after completing the association task, and after performing the shutdown instruction, the to-be-shut-down robot enters a shutdown state in which the to-be-shut-down robot loses contact with the terminal and the server, and starts up based on the wake-up time information in the shutdown instruction.

In an embodiment, the scheduling server further includes a state obtaining module.

The state obtaining module is configured to obtain a current state of the to-be-shut-down robot.

FIG. 11 is a schematic diagram illustrating a terminal and a scheduling server according to an embodiment of the present disclosure. The terminal comprises a memory and a processor, where the memory stores computer programs, and the computer programs, when executed by the processor, cause the processor to perform the steps of the wake-up method for the robot in the shutdown state of the embodiments of the present disclosure. The scheduling server comprises a memory and a processor, where the memory stores computer programs, and the computer programs, when executed by the processor, cause the processor to perform the steps of the wake-up method for the robot in the shutdown state of the embodiments of the present disclosure.

The memory may include a random access memory (RAM) or a non-volatile memory (NVM), such as at least one disk memory. Optionally, the memory may also be at least one storage device located away from the processor.

The processor can be a general processor, including a central processing unit (CPU) , a network processor (NP) and so on. The processor can also be a digital signal processing (DSP), an application specific integrated circuit (ASIC), a field-programmable gate array (FPGA) or other programmable logic devices, a discrete gate or a transistor logic device, and a discrete hardware component.

The present disclosure provides a computer-readable storage medium, storing computer programs thereon, wherein the computer programs, when executed by a processor, cause the processor to perform the steps of the wake-up method for the robot in the shutdown state of the embodiments of the present disclosure.

As for the apparatus/network side device/storage medium embodiments, since they are basically similar to the method embodiments, they are described relatively briefly, and for the relevant parts, reference can be made to the description of the method embodiments.

It will be noted that the relational terms such as "first" and "second" used herein are merely intended to distinguish one entity or operation from another entity or operation rather than to require or imply any such actual relation or order existing between these entities or operations. Further, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The above description is only preferred examples of the present disclosure, and is not intended to limit the disclosure, and any modifications, equivalents, improvements, etc., which are made within the spirit and principles of the present disclosure, should be included scope of the present disclosure.

## Claims

1. A wake-up method for a robot in a shutdown state, performed by a server providing robot control services and comprising:
receiving a shutdown request from a terminal for controlling a robot to operate, wherein the shutdown request is generated by the terminal in response to a shutdown operation which is input by a user and comprises configurable wake-up time information and identifier information of a to-be-shut-down robot, and the shutdown request carries the wake-up time information and the identifier information of the to-be-shut-down robot; and
sending, based on the identifier information of the to-be-shut-down robot, an association task associated with a shutdown task and a shutdown instruction carrying the wake-up time information to the to-be-shut-down robot, such that the to-be-shut-down robot performs the shutdown instruction after completing the association task, and after performing the shutdown instruction, the to-be-shut-down robot enters a shutdown state in which the to-be-shut-down robot loses contact with the terminal and the server, and starts up based on the wake-up time information in the shutdown instruction;
wherein there are one or more to-be-shut-down robots.

2. The wake-up method of claim 1, wherein in response to the shutdown request, sending, by the server, the association task associated with the shutdown task and the shutdown instruction carrying the wake-up time information to the to-be-shut-down robot comprises:
in response to the shutdown request, establishing, by the server, the association task associated with the shutdown task and generating the shutdown instruction carrying the wake-up time information;
sending the association task to the to-be-shut-down robot satisfying a shutdown condition such that the to-be-shut-down robot performs the association task; and
sending the shutdown instruction to the to-be-shut-down robot completing the association task such that the to-be-shut-down robot performs the shutdown instruction.

3. The wake-up method of claim 2, wherein the shutdown operation further comprises shutdown mode information, and each to-be-shut-down robot corresponds to a same shutdown mode;
wherein in response to the shutdown request, establishing the association task associated with the shutdown task and generating the shutdown instruction carrying the wake-up time information comprises:
parsing the shutdown request to obtain information carried in the shutdown request,
establishing, based on the shutdown mode information carried in the shutdown request, the association task; and
generating, based on the wake-up time information carried in the shutdown request, the shutdown instruction carrying the wake-up time information;
wherein sending the association task to the to-be-shut-down robot satisfying the shutdown condition comprises:
determining, based on a current state of the to-be-shut-down robot, the to-be-shut-down robot satisfying the shutdown condition; and
sending the association task to the to-be-shut-down robot satisfying the shutdown condition.

4. The wake-up method of claim 2, wherein the shutdown operation further comprises a shutdown life cycle, and the shutdown life cycle is configured to set a shutdown waiting time length; each to-be-shut-down robot corresponds to a same shutdown life cycle,
wherein the shutdown request further carries the shutdown life cycle;
wherein sending the association task to the to-be-shut-down robot satisfying the shutdown condition comprises:
within the shutdown life cycle, in a case that the shutdown life cycle is not about to end, sending the association task to the to-be-shut-down robot satisfying the shutdown condition;
wherein sending the shutdown instruction to the to-be-shut-down robot completing the association task comprises:
in a case that the shutdown life cycle is to about end, sending the shutdown instruction to the to-be-shut-down robot completing the association task;
wherein the method further comprises:
in a case that the shutdown life cycle does not end, monitoring, in real time, a current state of the to-be-shut-down robot; and
within the shutdown life cycle, in a case that the shutdown life cycle is not about to end, processing the to-be-shut-down robot not satisfying the shutdown condition.

5. The wake-up method of claim 4, wherein processing the to-be-shut-down robot not satisfying the shutdown condition comprises:
in a case that the to-be-shut-down robot is in an unrecoverable abnormal circumstance, identifying the to-be-shut-down robot as a robot with shutdown anomaly;
in a case that the to-be-shut-down robot is in a recoverable abnormal circumstance and satisfy a shutdown battery level, recording abnormal information of the to-be-shut-down robot;
in a case that the to-be-shut-down robot is in the recoverable abnormal circumstance but does not satisfy the shutdown battery level and supports low-battery level charge, identifying the state of the to-be-shut-down robot as a to-be-charged state, and performing wake-up in the shutdown state in a charge-supporting shutdown mode; and
in a case that the to-be-shut-down robot is in the recoverable abnormal circumstance but does not satisfy the shutdown battery level nor supports the low-battery level charge, identifying the to-be-shut-down robot as a low-battery-level robot.

6. The wake-up method of claim 3, wherein the robot is a movable robot,
wherein sending the association task to the to-be-shut-down robot satisfying the shutdown condition comprises:
for the to-be-shut-down robot in a first state, matching a shutdown stay position closest to the to-be-shut-down robot, and in a case that the shutdown stay position is successfully matched, identifying the current state of the to-be-shut-down robot as a second state, wherein the first state is configured to represent that the to-be-shut-down robot is in a state of waiting for shutdown but not being chargeable, and the second state is configured to represent that the to-be-shut-down robot is in a state matching the shutdown stay position;
for the to-be-shut-down robot, establishing an association task and a shutdown instruction for moving to the shutdown stay position;
sending the association task and the shutdown instruction for moving to the shutdown stay position to the to-be-shut-down robot in the second state such that the to-be-shut-down robot in the second state performs a task for moving to the shutdown stay position; and
obtaining a progress that the to-be-shut-down robot performs the task for moving to the shutdown stay position, and in a case of completing the task for moving to the shutdown stay position, identifying the current state of the to-be-shut-down robot as a third state, wherein the third state is configured to represent that the to-be-shut-down robot is in a state of waiting for distribution of the shutdown instruction;
wherein sending the shutdown instruction to the to-be-shut-down robot completing the association task comprises:
sending the shutdown instruction to the to-be-shut-down robot in the third state such that the to-be-shut-down robot performs the shutdown operation.

7. The wake-up method of claim 6, wherein the shutdown mode is a common shutdown mode which is configured to perform wake-up in the shutdown state for the robot without constraint of the shutdown condition,
wherein establishing, based on the shutdown mode information carried in the shutdown request, the association task comprises:
identifying, based on the information of the common shutdown mode, the current state of the to-be-shut-down robot as the first state; and
for the to-be-shut-down robot, establishing the association task and the shutdown instruction for moving to the shutdown stay position.

8. The wake-up method of claim 6, wherein the shutdown mode is a charge-supporting shutdown mode, and is configured to perform wake-up in the shutdown state for a low-battery-level robot with a current battery level lower than a preset battery level threshold,
wherein establishing, based on the shutdown mode information carried in the shutdown request, the association task comprises:
based on information of the charge-supporting shutdown mode,
identifying the current state of the to-be-shut-down robot as a fourth state, wherein the fourth state is configured to represent that the to-be-shut-down robot is in a state of waiting for shutdown and being chargeable;
matching a charging station position for the to-be-shut-down robot in the fourth state; and
for the to-be-shut-down robot, establishing an association task and a shutdown instruction for moving to a charging station and charging;
wherein the method further comprises, before sending the association task to the to-be-shut-down robot satisfying the shutdown condition:
sending the association task and the shutdown instruction for moving to the charging station and charging to the to-be-shut-down robot in the fourth state such that the to-be-shut-down robot in the fourth state performs the association task for moving to the charging station and charging; and
obtaining a current battery level state of the to-be-shut-down robot, and updating, based on the obtained current battery level state, the current state of the to-be-shut-down robot in the fourth state; when the current battery level state satisfies a shutdown battery level threshold, identifying the current state of the to-be-shut-down robot as the first state, and performing the step of sending the association task to the to-be-shut-down robot satisfying the shutdown condition.

9. The wake-up method of claim 6, wherein the shutdown mode is a shutdown mode releasing load in situ, and is configured to perform wake-up in the shutdown state for the robot capable of releasing load;
wherein establishing, based on the shutdown mode information carried in the shutdown request, the association task comprises:
in a case of detecting presence of the to-be-shut-down robot supporting releasing load in situ, establishing for the to-be-shut-down robot an association task and a shutdown instruction for releasing load in situ;
wherein the wake-up method further comprises, before sending the association task to the to-be-shut-down robot satisfying the shutdown condition:
sending the association task and the shutdown instruction for releasing load in situ to the detected to-be-shut-down robot such that the detected to-be-shut-down robot performs the association task for releasing load in situ; and
obtaining the progress that the to-be-shut-down robot performs the association task for releasing load in situ, and in a case of completing a task for releasing load in situ, identifying the current state of the to-be-shut-down robot as the first state, and performing the step of sending the association task to the to-be-shut-down robot satisfying the shutdown condition.

10. The wake-up method of claim 1, wherein the to-be-shut-down robot in a same shutdown request shares the same wake-up time information.

11. A wake-up method for a robot in a shutdown state, performed by a terminal for controlling a robot to operate and comprising:
in response to a shutdown operation which is input by a user and comprises configurable wake-up time information and identifier information of a to-be-shut-down robot, sending a shutdown request carrying the wake-up time information and the identifier information of the to-be-shut-down robot to a server for providing robot control services, such that the server performs the wake-up method for the robot in the shutdown state according to any one of claims 1 to 10,
wherein there are one or more to-be-shut-down robots.

12. A terminal, comprising:
a first response module, configured to: in response to a shutdown operation which is input by a user and includes configurable wake-up time information and identifier information of a to-be-shut-down robot, send a shutdown request carrying the wake-up time information and the identifier information of the to-be-shut-down robot to a server for providing robot control services, such that the server performs the wake-up method for the robot in the shutdown state according to any one of claims 1 to 10.

13. A scheduling server, providing robot control services and comprising:
a second response module, configured to: receive a shutdown request from a terminal for controlling a robot to operate, wherein the shutdown request is generated by the terminal in response to a shutdown operation which is input by a user and comprises configurable wake-up time information and identifier information of a to-be-shut-down robot, and the shutdown request carries the wake-up time information and the identifier information of the to-be-shut-down robot; and
a start and shutdown module, configured to: send, based on the identifier information of the to-be-shut-down robot, an association task associated with a shutdown task and a shutdown instruction carrying the wake-up time information to the to-be-shut-down robot such that the to-be-shut-down robot performs the shutdown instruction after completing the association task, and after performing the shutdown instruction, the to-be-shut-down robot enters a shutdown state in which the to-be-shut-down robot loses contact with the terminal and the server, and starts up based on the wake-up time information in the shutdown instruction;
wherein there are one or more to-be-shut-down robots.

14. A system for robot management, comprising: a terminal according to claim 12, and a scheduling server according to claim 13.
